(19) Europäisches Patentamt
European Patent Office
Office européen des brevets

(11) Veröffentlichungsnummer: **0 040 747**
**B1**

(12) **EUROPÄISCHE PATENTSCHRIFT**

(45) Veröffentlichungstag der Patentschrift: **06.08.86**

(51) Int. Cl.[4]: **C 08 G 75/02**, C 08 G 75/16

(21) Anmeldenummer: **81103590.6**

(22) Anmeldetag: **11.05.81**

(54) **Verfahren zur Herstellung von Polyarylensulfiden.**

(30) Priorität: **23.05.80 DE 3019732**

(43) Veröffentlichungstag der Anmeldung:
**02.12.81 Patentblatt 81/48**

(45) Bekanntmachung des Hinweises auf die Patenterteilung:
**06.08.86 Patentblatt 86/32**

(84) Benannte Vertragsstaaten:
**DE FR GB IT**

(56) Entgegenhaltungen:
**EP - A - 0 023 313**
**DE - A - 2 623 333**
**DE - A - 2 817 731**
**US - A - 4 089 847**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Idel, Karsten, Dr., Scheiblerstrasse 81, D-4150 Krefeld (DE)**
Erfinder: **Freitag, Dieter, Dr., Hasenheide 10, D-4150 Krefeld 1 (DE)**
Erfinder: **Bottenbruch, Ludwig, Dr., Woehlerstrasse 5, D-4150 Krefeld 1 (DE)**
Erfinder: **Merten, Josef, Dr., Krunsend 30, D-4052 Korschenbroich 1 (DE)**

**EP 0 040 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Polyarylensulfide sind im Prinzip bekannt (siehe beispielsweise US-PS 25 38 941 und US-PS 25 13 188). Die Herstellung kann in Substanz aus den entsprechenden Halogenaromaten und Alkali- oder Erdalkalisulfiden erfolgen.

Die Herstellung mittels Alkalisulfiden kann auch unter Mitverwendung von polaren Lösungsmitteln erfolgen (siehe dazu beispielsweise US-PS 33 54 129 bzw. DOS 14 68 782), wobei gegebenenfalls Kupferkatalysatoren mitverwendet werden können.

Gemäss DE-OS 24 53 749 bzw. US-PS 39 19 177 werden für die Herstellung von Polyarylensulfiden Alkalicarboxylate als Katalysatoren verwendet. Als Lösungsmittel dienen Amide und zur Aktivierung der Schwefelspender anorganische Basen.

Gemäss DE-OS 26 23 363 bzw. US-PS 40 38 261 werden als Katalysatoren für die Herstellung von Arylensulfidpolymeren Lithiumchlorid oder Lithiumcarboxylat eingesetzt.

N-Methylpyrrolidon und Alkalihydroxide vervollständigen das Katalysatorsystem.

Gemäss US-PS 40 38 259 werden Alkalicarbonate in Kombination mit Alkalicarboxylaten, gemäss US-PS 40 38 263 Lithiumhalogenide und gemäss US-PS 40 39 518 Lithiumcarbonate als Katalysatoren für die Polyphenylensulfidherstellung eingesetzt.

Gemäss DE-OS 26 23 362 bzw. US-PS 40 38 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäss DE-OS 26 23 333 bzw. US-PS 40 46 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

Gemäss DE-OS 28 17 731 bzw. US-PS 41 16 947 werden Natriumcarboxylate in Anwesenheit definierter Mengen Wasser als Katalysatoren für die Herstellung von verzweigten Arylensulfidpolymeren verwendet.

Gegenstand der vorliegenden Erfindung ist demgegenüber ein Verfahren zur Herstellung von Polyarylensulfiden die gegebenenfalls verzweigt sein können, aus

a) Dihalogenbenzolen, die aus 50 bis 100 Mol-% Verbindungen der Formel I, oder II oder deren Gemischen, vorzugsweise jedoch aus Verbindungen der Formel I

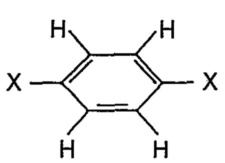 (I), 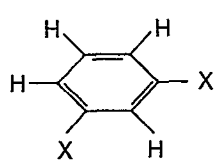 (II)

und aus 0 bis 50 Mol-% Dihalogenbenzolen der Formel III bestehen,

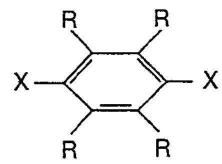 (III)

wobei

X Fluor, Brom, Chlor oder Jod vorzugsweise Chlor und Brom ist und

R gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, und/oder zwei Reste R zu einem aromatischen oder heterocyclischen Ring verknüpft sein können, wobei jedoch immer mindestens ein R verschieden von Wasserstoff ist, und

b) 0 bis 3,0 Mol-%, bezogen auf den Dihalogenbenzolanteil, eines Polyhalogenaromaten der Formel IV

$$ArX_n, \qquad (IV)$$

wobei

Ar bein beliebiger aromatischer oder heterocyclischer Rest mit 6 bis 24 C-Atomen und mindestens 3 freien Wertigkeiten ist,

X die gleiche Bedeutung wie in Formel I, II und III hat und

$n \geqq 3$ ist,

und einem

c) Alkalisulfid, bevorzugt Natrium- oder Kaliumsulfid oder deren Mischung, bevorzugt in Form der Hydrate oder wässriger Mischungen, gegebenenfalls zusammen mit Alkalihydroxiden in einem

d) polaren Lösungsmittel, bevorzugt einem Amid oder Lactam, insbesondere einem N-Alkyllactam,

wobei das molare Verhältnis von a) zu c) im Bereich von 0,85:1 bis 1,15:1, bevorzugt 0,95:1 bis 1,05:1 und von c) zu d) im Bereich von 1:2 bis 1:15 liegt, bei einer Polykondensationszeit von bis zu 30 Stunden, vorzugsweise von 0,2 bis 8 Stunden, und einer Polykondensationstemperatur zwischen 160 und 295 °C, bevorzugt zwischen 190 und 275 °C, das dadurch gekennzeichnet ist, dass die Reaktion in Anwesenheit von 0,05–2,0 Mol, bevorzugt 0,1–1,0 Mol, bezogen auf 1 Mol Alkalisulfid, von Natrium- oder Kaliumfluorids oder deren Mischung, durchgeführt wird, wobei die Fluoride auch in Form ihrer Hydrate oder wässrigen Mischungen eingesetzt werden können und vor der Zugabe der Dihalogenbenzole eine oder mehrere Entwässerungsstufen durchgeführt werden.

Nach dem erfindungsgemässen Verfahren werden Polyarylensulfide mit höheren inhärenten Viskositäten bzw. Grenzviskositätszahlen und niedrigerem Schmelzfluss erhalten, als nach einem analogen Verfahren ohne die Mitverwendung der Alkalifluoride.

Als Alkalisulfide werden bevorzugt Natrium- und Kaliumsulfid ($Na_2S$ bzw. $K_2S$) oder Mischungen davon im allgemeinen als Hydrate oder in Mischungen mit Wasser verwendet.

Ebenso werden die erfindungsgemässen Alkalifluoride, Natrium- oder Kaliumfluorid bevorzugt in Form ihrer Hydrate oder in Mischungen mit Wasser eingesetzt.

Es können natürlich auch direkt die entsprechenden Alkalihydroxide gegebenenfalls als wässrige Mischungen mit Flusssäure im gewünschten stöchiometrischen Verhältnis in der Reaktionslösung zur Neutralisation gebracht werden, wobei eine besonders homogene Verteilung der entstehenden erfindungsgemässen Fluoride erreicht wird.

Es können sowohl ein Alkalifluorid als auch mehrere verschiedene Alkalifluoride eingesetzt werden.

Ebenso können die Alkalisulfide aus Schwefelwasserstoff oder den Alkalihydrogensulfiden und entsprechenden stöchiometrischen Mengen Alkalihydroxiden durch Neutralisation in oder ausserhalb der Reaktionslösung erhalten werden. Es empfiehlt sich auch bei Verwendung der reinen Alkalisulfide zusätzlich Alkalihydroxide zuzugeben, um häufig beigemengte Alkalihydrogensulfide zu neutralisieren.

Beispiele für die erfindungsgemässe einzusetzenden p-Dihalogenbenzole der Formel I sind:
p-Difluorbenzol, p-Dichlorbenzol,
p-Dibrombenzol, p-Dijodbenzol,
1-Fluor-4-chlorbenzol, 1-Fluor-4-brombenzol,
1-Chlor-4-brombenzol, 1-Chlor-4-jodbenzol
und 1-Brom-4-jodbenzol.
Sie sind allein oder im Gemisch miteinander einsetzbar.

Beispiele für m-Dihalogenbenzole der Formel II sind:
m-Difluorbenzol, m-Dichlorbenzol,
m-Dibrombenzol, 1-Chlor-3-brombenzol,
1-Chlor-3-jodbenzol und 1-Brom-3-jodbenzol.
Sie sind allein oder im Gemisch miteinander einsetzbar. Ebenso können Gemische der p-Dihalogenbenzole und der m-Dihalogenbenzole Verwendung finden.

Beispiele für die erfindungsgemäss einzusetzenden p-Dihalogenbenzole der Formel III sind
2,5-Dichlortoluol, 2,5-Dichlorxylol,
1-Ethyl-2-dichlorbenzol,
1-Ethyl-2,5-dibrombenzol,
1-Ethyl-2-brom-5-chlorbenzol,
1,2,4,5-Tetramethyl-3,6-dichlorbenzol,
1-Cyclohexyl-2,5-dichlorbenzol,
1-Phenyl-2,5-dichlorbenzol,
1-Benzyl-2,5-dichlorbenzol,
1-Phenyl-2,5-dibrombenzol,
1-p-Tolyl-2,5-dichlorbenzol,
1-p-Tolyl-2,5-dibrombenzol,
1-Hexyl-2,5-dichlorbenzol,
1,4-Dichloranthrachinon.
Sie sind allein oder im Gemisch miteinander einsetzbar.

Beispiele für die erfindungsgemäss einzusetzenden Polyhalogenaromaten der Formel IV sind:
1,2,3-Trichlorbenzol, 1,2,4-Trichlorbenzol,
1,2,4-Tribrombenzol, 1,2,4-Trijodbenzol,
1,3,5-Trichlor-2,4,6-trimethylbenzol,
1,2,3-Trichlornaphthalin,
1,2,4-Trichlornaphthalin,
1,2,6-Trichlornaphthalin,
2,3,4-Trichlortoluol, 2,4,6-Trichlortoluol,
1,2,3,4-Tetrachlornaphthalin,
1,2,4,5-Tetrachlorbenzol,
2,2'-4,4'-Tetrachlorbiphenyl,
1,3,5-Trichlor-triazin.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden jedoch Lactame und Amide und besonders bevorzugt N-Alkyllactame eingesetzt.

Lactame im Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z.B. einen Alkylrest mit 1 bis 5 C-Atomen.

N-Alkyllactame im Sinne der vorliegenden Erfindung sind wie die erfindungsgemässen Lactame definiert, tragen jedoch zusätzlich am Stickstoffatom einen Alkylrest mit 1 bis 3 C-Atomen.

Amide im Sinne der Erfindung sind solche von Carbonsäuren mit 1 bis 5 C-Atomen, und bevorzugt solche von Carbonsäuren mit 1 bis 5 C-Atomen, die am Amidstickstoff zwei Alkylreste mit 1 bis 3 C-Atomen tragen.

Beispielsweise kommen als Lösungsmittel in Frage:

Dimethylformamid, Dimethylacetamid,
Caprolactam, N-Methylcaprolactam,
N-Ethylcaprolactam, N-Isopropylcaprolactam,
N-Methyl-2-pyrrolidon, N-Ethyl-2-pyrrolidon,
N-Isopropyl-2-pyrrolidon,
N-Methyl-3-methyl-2-pyrrolidon,
N-Methyl-5-methyl-2-pyrrolidon,
N-Methyl-3,4,5-trimethyl-2-pyrrolidon,
N-Methyl-2-piperidon,
N-Ethyl-2-piperidon,
N-Methyl-6-methyl-2-piperidon,
N-Methyl-3-ethyl-2-piperidon,
N-Methyl-2-oxohexamethylenimin,
N-Ethyl-2-oxohexamethylenimin.

Es können auch Mischungen der vorstehenden Lösungsmittel gewählt werden.

Nach dem erfindungsgemässen Verfahren können das p-Dihalogenbenzol, oder das m-Dihalogenbenzol oder deren Gemische, vorzugsweise jedoch das p-Dihalogenbenzol gegebenenfalls mit einem Polyhalogenaromaten der Formel IV, das Alkalisulfid gegebenenfalls mit Alkalihydroxid und Natrium- und Kaliumfluoride im Prinzip in jeder Form in dem erfindungsgemäss einzusetzenden polaren Lösungsmittel, gemischt und zur Reaktion gebracht werden. Dabei ist es jedoch von Vorteil, wenn das Wasser, das in Form von Hydratwasser der Alkalisulfide und Natrium- und Kaliumfluoride und/oder frei als Mischungskomponente von wässrigen Lösungen der erfindungsgemäss einzusetzenden Sulfide und Fluoride vorliegen kann, vor der Zugabe der Umsetzung des Dihalogenbenzols mindestens grösstenteils entfernt wird.

Die Entwässerung kann beispielsweise durch Abdestillieren des Wassers aus der Reaktionslösung erfolgen. In einer bevorzugten Reaktionsführung wird dabei das N-Alkyllactam zusammen mit den erfindungsgemässen Alkalifluoriden vorgelegt und in einer ersten Entwässerungsstufe das Hydrat- oder Mischungswasser entfernt. Anschliessend werden die gewünschten Anteile Alkalisulfid zugegeben und gegebenenfalls eine zweite Entwässerungsstufe durchgeführt. Diese beiden Entwässerungsstufen können auch zu einem Entwässerungsschritt kombiniert werden. Danach werden das Dihalogenbenzol und gegebenenfalls die Polyhalogenverbindung der Formel IV hinzugefügt und unter weiterer Temperatursteigerung die eigentliche Polymerreaktion in Gang gesetzt.

Bei den Entwässerungsstufen ist die Temperatur langsam zu steigern, um ein Aufschäumen des Reaktionsgemisches zu verhindern.

Sobald die Siedetemperatur des Lösungsmittels erreicht ist, kann mit der eigentlichen Polymerreaktion begonnen werden.

Die Reaktionstemperatur der erfindungsgemässen Polykondensation liegt in der Regel im Bereich von 160 °C bis 295 °C, bevorzugt im Bereich von 190 bis 275 °C. Die Reaktionszeit kann bis zu 30 Stunden betragen, liegt jedoch vorzugsweise zwischen 0,2 und 8 Stunden. Eine stufenweise Steigerung der Reaktionstemperatur während dieser Zeit ist von Vorteil.

Das Dihalogenbenzol und das Alkalisulfid werden möglichst äquimolar umgesetzt. Das Molverhältnis Dihalogenbenzol/Alkalisulfid liegt demgemäss bevorzugt im Bereich von 0,95:1 bis 1,05:1. Es kann jedoch auf den Bereich 0,85:1 bis 1,15:1 erweitert werden.

Die erfindungsgemäss einzusetzenden Polyhalogenaromaten der Formel IV können bis zu einer Menge von mehreren Mol-%, bezogen auf den Anteil Dihalogenbenzol, je nach den Versuchsbedingungen zugesetzt werden, in der Regel wird jedoch ein Anteil von 0 bis 3,0 Mol-%, vorzugsweise 0,1 bis 3,0 Mol-%, bezogen auf den Anteil Dihalogenbenzol, ausreichend sein.

Die Menge Lösungsmittel kann in einem weiten Bereich gewählt werden, liegt im allgemeinen jedoch bei 2 bis 15 Mol, pro Mol Alkalisulfid.

Je nach Anteilen von Alkalihydrogensulfid im technischen Alkalisulfid wird die Menge Alkalihydroxid gewählt. Sie kann bis 0,8 Mol pro Mol Alkalisulfid liegen, kann jedoch erforderlichenfalls auch höher gewählt werden.

Als Alkalihydroxide werden z.B. Lithiumhydroxid, Natriumhydroxid und Kaliumhydroxid oder Mischungen davon eingesetzt. Gegebenenfalls können auch für den gleichen Zweck solche Ver bindungen eingesetzt werden, die durch einen Hydrolyseschritt in der Kombination mit Wasser Alkalihydroxide regenerieren.

Die Menge der erfindungsgemässen Fluoride, Natrium- und Kaliumfluorid kann je nach den Versuchsbedingungen variiert werden, liegt aber allgemein zwischen 0,05 und 2 Mol, bevorzugt 0,1 bis 1,0 Mol, pro Mol Alkalisulfid.

Die Aufarbeitung des Reaktionsgemisches kann in mannigfaltiger Weise erfolgen.

Das Polyarylensulfid kann direkt aus der Reaktionslösung oder erst nach Zugabe z.B. von Wasser und/oder verdünnten Säuren nach üblichen Verfahrensweisen abgetrennt werden, beispielsweise durch Filtration oder durch Zentrifugieren.

Nach der Filtration schliesst sich im allgemeinen zur Entfernung von anorganischen Bestandteilen, die den Polymeren anhaften können, wie z.B. die Alkalisulfide oder die erfindungsgemässen Fluoride, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschliessende Wäsche wie oben beschrieben, gewonnen werden.

Gegenüber der unkatalysierten Darstellung von Polyarylensulfiden werden nach dem erfindungsgemässen Verfahren Polyarylensulfide mit einer höheren Grenzviskositätszahl und einem niedrigeren Schmelzfluss erhalten.

In den deutschen Offenlegungsschriften 26 23 333 und 26 23 363 wird als Bezugsgrösse für das Molekulargewicht die inhärente Viskosität in 1-Chlor-naphthalin bei 206 °C und einer Konzentration von 0,4 g Polymer/100 ml Lösungsmittel gemessen. In diesem Temperatur- und Konzentrationsbereich ist jedoch die Gefahr der Bildung von Assoziaten relativ gross. Zur Charakterisierung der erfindungsgemässen Polyarylensulfide wird deshalb die Grenzviskositätenzahl [η] bestimmt, die sich aus Messungen inhärenter Viskositäten mit der Extrapolation der Konzentration gegen Null ergibt.

$$[\eta] = \frac{\ln \eta \text{ rel}}{C} \text{ für } C \rightarrow O$$

Der im Vergleich zu unkatalysiert erhaltenden Polyarylensulfiden niedrige Schmelzfluss der erfindungsgemässen Polyarylensulfide bietet besondere verarbeitungstechnische Vorteile. (Das Schmelzfliessverhalten wird nach ASTM D 1238–70, unter Verwendung eines 5 kg Gewichtes und Änderung der Temperatur auf 316 °C gemessen, wobei der Wert in g/10 Min. ausgedrückt wird.).

Der Schmelzfluss der erfindungsgemässen Polyarylensulfide liegt im Bereich von 1–2000 g/10 Min. und kann durch chemische Verzweigung (Zudosieren von 0,1–3,0 Mol-% Verbindungen der Formel IV, z.B. 1,2,4-Trichlorbenzol) und/oder Kettenverlängerung und Verzweigung durch eine Temperung, die unter Stickstoff oder in Vakuum, gegebenenfalls mit einer Vorvernetzung über Luft oder Sauerstoffzugabe bei Temperaturen von 200–370 °C, durchgeführt wird, in den Bereich von 1–1000 g/ Min. erniedrigt werden, so dass die dabei erhaltenen Polyphenylensulfide über Extrusion, Extrusionsblasen, Spritzgiessen oder sonst üblichen Verarbeitungstechniken zu Folien, Formkörpern oder Fasern verarbeitet werden können, welche in üblicher Weise Verwendung finden als Automobil-Teile, Armaturen, Elektro-Teile, z.B. Schalter, Elektronische Tafeln, Chemikalienresistente Teile und Apparate wie Pumpen-Gehäuse und Pumpen-Flügelräder, Ätzbadschalen, Dichtungsringe, Teile von Büromaschinen und Fernmeldeeinrichtungen sowie Haushaltsgeräte, Ventile, Kugellagerteile etc.

Die erfindungsgemässen Polyarylensulfide können auch mit anderen Polymeren, mit Pigmenten und Füllstoffen, wie beispielsweise Graphit, Metallpulver, Glaspulver, Quarzmehl oder Glasfasern, gemischt oder mit der für Polyarylensulfide üblichen Additiven, wie beispielsweise üblichen Stabilisatoren oder Entformungsmitteln versetzt werden.

Beispiel 1 (Vergleich)

Dieses Beispiel beschreibt als Vergleichsbeispiel die Darstellung von Polyphenylensulfid ohne die erfindungsgemässe Katalyse (US-Pat. 33 54 129).

In einem mit Rührer ausgerüsteten Autoklaven wurden 130 g (1,0 Mol/60%ige Ware) Natriumsulfid ($Na_2SxH_2O$) und 300 g N-Methyl-2-pyrrolidon zusammengegeben. Das Gemisch wurde mit Stickstoff gespült und langsam bis auf 202 °C erwärmt. Dabei destillierten insgesamt 29 ml Wasser ab. Der Ansatz wurde anschliessend auf ca. 160 °C heruntergekühlt und 147 g p-Dichlorbenzol in ca. 50 g N-Methyl-2-pyrrolidon hinzugefügt. Man erwärmt das Reaktionsgemisch unter einem Stickstoffvordruck von 2,5 bar in 30 Min. auf 245 °C, wobei der Druck auf 10 bar ansteigt, und hält diese Temperatur 3 Stunden. Nach Abkühlen auf Raumtemperatur wird ein grauer Feststoff isoliert, der anschliessend einer sorgfältigen Wasserwäsche zur Entfernung der anorganischen Beimengungen unterworfen wird.

Man trocknet bei 80 °C im Vakuum und erhält 100,3 g (93%) Poly-(p-phenylensulfid) mit folgenden Kenndaten:
Grenzviskositätszahl [η]: 10,2
Schmelzfliessverhalten g/10 Min.: 2400

Beispiel 2

Nach dem erfindungsgemässen Verahren wurde Kaliumfluorid (KF) in wässriger Lösung eingesetzt:

55,3 g (0,94 Mol) Kaliumfluorid wurden in 168,8 g Wasser gelöst und in 750 g 1-Methyl-2-pyrolidon gegeben.

Unter Stickstoff wurde durch Aufheizen bis 178 °C innerhalb von 5 Stunden entwässert, wobei 173 ml Destillat, die 89 % Wasser enthielten, erhalten wurden. Anschliessend wurden 245,2 g Natriumsulfid-trihydrat (ca. 60%ig) (1,950 Mol) und 4,0 g NaOH in 10 ml $H_2O$ zugesetzt und durch Aufheizen bei 200 °C erneut entwässert, wobei insgesamt 204 ml Destillat mit 83% Wasser aufgefangen wurden.

Nach Zugabe von 275,6 g p-Dichlorbenzol (1,875 Mol) in 200 g 1-Methyl-2-pyrolidon wurde die Reaktion mit 50 bar Vordruck in Autoklaven eingeleitet und wie folgt gefahren:
1 h bei 205 °C: 54 bar
in 0,5 h von 205 °C auf 266 °C: 54 bar→65 bar
4 h bei 266 °C: 65 bar

Anschliessend wurde der Ansatz in 2 l Wasser gegeben, abgesaugt und neutral gewaschen. Ausbeute nach Trocknen 195 g≙96%
Grenzviskosität [η] = 14,8
Schmelzfliessverhalten g/10 Min. = 1120

Beispiel 3

Der Ansatz wurde wie in Beispiel 2, jedoch mit der halben Menge Kaliumfluorid (27,65 g≙0,47 Mol) und bei niedrigerem Druck gefahren.
Reaktionsverlauf:
1 h bei 205 °C: 3 bar
in 0,5 h von 205 °C auf 266 °C: 13 bar
4 h bei 266 °C: 13,5 bar
Ausbeute 191,0 g≙94,5 g
Grenzviskositätszahl [η] = 13,9
Schmelzfliessverhalten g/10 Min. = 1230

Beispiel 4

Der Ansatz wurde wie in Beispiel 2, jedoch mit der doppelten Menge Kaliumfluorid (110,6 g KF≙1,875 Mol) und bei höherem Druck gefahren:
1 h bei 205: 206 bar
in 0,5 h bon 205 °C auf 266 °C: 218 bar
4 h bei 266 °C: 218 bar
Ausbeute 199 g≙98%
Grenzviskosität [η] = 16,2
Schmelzfliessverhalten g/10 Min. = 980

Beispiel 5

Wie Beispiel 2, jedoch wurde anstelle von Kaliumfluorid die gleiche molare Menge Natriumfluorid (0,94 Mol≙39,4 g) eingesetzt. Reaktionsführung wie in Beispiel 2.
Grenzviskositätszahl [η] = 15,2
Schmelzfliessverhalten g/10 Min. = 1060

Beispiel 6

Zu 750 g N-Methylpyrolidon und 75,2 g (0,94 Mol) 58%iger Natronlauge wurden langsam unter Abführung der Neutralisationswärme 46,97 g Fluorwasserstoffsäure (40%ig) zugetropft. Anschliessend wurde durch Aufheizen unter Stickstoff bis auf 180 °C entwässert, wobei 75,5 g Destillat mit 85% Wasseranteil erhalten wurden. Die weitere Verfahrensweise der Entwässerung von Natriumsulfid-Trihydrat sowie der Zugabe von p-Dichlorbenzol und die Temperatur-Drucksteuerung entsprechen den Angaben in Beispiel 2.
Grenzviskositätszahl [η] = 15,6
Schmelzfliessverhalten g/10 Min. = 990

Beispiel 7

Wie Beispiel 5, jedoch wurden zusammen mit p-Dichlorbenzol 5,45 g = 1,6 Mol% (bezogen auf Mole p-Dichlorbenzol) 1,2,4-Trichlorbenzol als Verzweigungskomponente eingesetzt und die Natriumsulfidmenge wegen des vermehrten Halogenaromatenanteils (1,6 Mol% Trichlorbenzol) von 254,7 g auf 273,2 g (2,07 Mol) angehoben.
Grenzviskositätszahl [η] = 18,2
Schmelzfliessverhalten g/10 Min. = 720

**Patentansprüche**

1. Verfahren zur Herstellung von Polyarylensulfiden durch Umsetzung von

a) Dihalogenbenzolen, die aus 50 bis 100 Mol-% Verbindungen der Formel I oder II oder deren Gemische

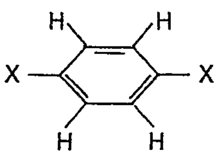 (I), 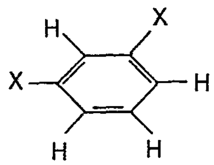 (II)

und aus 0 bis 50 Mol-% Verbindungen der Formel III bestehen,

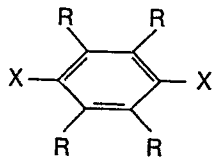 (III)

wobei

X Fluor, Chlor, Brom oder Jod, vorzugsweise Chlor und Brom und,

R gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, und/oder zwei Reste R zu einem aromatischen oder heterocyclischen Ring verknüpft sein können, wobei jeweils immer mindestens ein R verschieden von Wasserstoff ist, und

b) 0 bis 3,0 Mol-%, bezogen auf den Dihalogenbenzolanteil eines Polyhalogenaromaten der Formel IV

$$Ar\ X_n, \quad (IV)$$

wobei Ar ein beliebiger aromatischer oder heterocyclischer Rest mit 6 bis 24 C-Atomen und mindestens 3 freien Wertigkeiten ist, X die gleiche Bedeutung wie in Formel I, II und III hat und $n \geqq 3$ ist, mit einem

c)Alkalisulfid

in einem

d) polaren Lösungsmittel,

wobei das molare Verhältnis von a) zu c) im Bereich von 0,85:1 bis 1,15:1 und von c) zu d) im Bereich 1:2 bis 1:15 liegt, bei einer Polykondensationszeit von bis zu 30 Stunden und einer Polykondensationstemperatur zwischen 160 und 295 °C, dadurch gekennzeichnet, dass die Reaktion in Anwesenheit von 0,05–2,0 Mol, bezogen auf 1 Mol Alkalisulfid, von Natriumfluorid oder Kaliumfluorid oder deren Mischungen durchgeführt wird.

2. Verfahren gemäss Anspruch 1, dadurch gekennzeichnet, dass als Komponente a) 50 bis 100 Mol-% Verbindungen der Formel I und 0–50 Mol-% Verbindungen der Formel III eingesetzt werden.

3. Verfahren gemäss Anspruch 1, dadurch gekennzeichnet, dass als Komponente a) 100 Mol-% Verbindungen der Formel I eingesetzt wurden.

4. Verfahren gemäss Ansprüche 1 bis 3, dadurch gekennzeichnet, dass die Polykondensationszeit 0,2 bis 8 Stunden beträgt.

5. Verfahren gemäss Ansprüche 1 bis 4, dadurch gekennzeichnet, dass die Reaktionstemperatur zwischen 190 °C und 275 °C liegt.

6. Verfahren gemäss Ansprüche 1 bis 5, dadurch gekennzeichnet, dass die Reaktion in Gegenwart von 0,1 bis 1,0 Mol an Alkalifluorid, bezogen auf 1 Mol Alkalisulfid, durchgeführt wird.

7. Verfahren gemäss Ansprüche 1 bis 6, dadurch gekennzeichnet, dass die Alkalisulfide und Alkalifluoride in Form ihrer Hydrate oder in wässrigen Mischungen eingesetzt werden und vor der Zugabe von Dihalogenbenzolen ein- oder mehrstufig entwässert wird.

8. Verfahren nach Anspruch 1 bis 7, dadurch gekennzeichnet, dass N-Methylpyrolidon als Lösungsmittel eingesetzt wird.

**Claims**

1. Process for the preparation of polyarylene sulphides by reacting

a) dihalogenobenzenes which consist fo 50 to 100 mol% of compounds of the formula I or II or of mixtures thereof

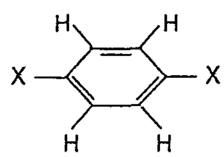 (I), 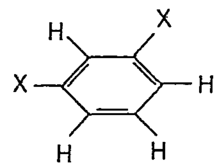 (II)

and of 0 to 50 mol% of compounds of the formula III

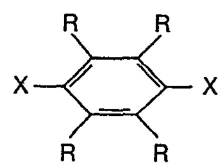 (III)

wherein

X is fluorine, chlorine, bromine of iodine, preferably chlorine and bromine, and, the radicals R are identical or different and can be hydrogen, $C_1$–$C_{20}$-alkyl, $C_5$–$C_{20}$-cycloalkyl, $C_6$–$C_4$-aryl, $C_7$–$C_{24}$-alkaryl or $C_7$–$C_{24}$-aralkyl, and/or

two radicals R can be linked to form an aromatic or heterocyclic ring, but always at least one R is other than hydrogen, and

b) 0 to 3.0 mol%, based on the dihalogenobenzene content, of a polyhalogenaromatic of the formula IV

$$ArX_n \quad (IV)$$

wherein

Ar is any desired aromatic or heterocyclic radical with 6 to 24 C atoms and at least 3 free valencies,

X has the same meaning as in formula I, II and III and $n \geqq 3$,

with an

c) alkali metal suphide in a

d) polar solvent,

the molar ratio of a) to c) being in the range from 0.85:1 to 1.15:1 and that of c) to d) being in the range from 1:2 to 1:15, with a polycondensation time of up to 30 hours and at a polycondensation temperature of between 160 and 295 °C, characterised in that the reaction is carried out in the presence of 0.05–2.0 mol, based on 1 mol of alkali metal sulphide, of sodium fluoride or potassium fluoride or mixtures thereof.

2. Process according to Claim 1, characterised in that 50 to 100 mol% of compounds of the formula I and 0–50 mol% of compounds of the formula III are employed as component a).

3. Process according to Claim 1, characterised in that 100 mol% of compounds of the formula I were employed as component a).

4. Process according to Claims 1 to 3, characterised in that the polycondensation time is 0.2 to 8 hours.

5. Process according to Claims 1 to 4, characterised in that the reaction temperature is between 190 °C and 275 °C.

6. Process according to Claims 1 to 5, characterised in that the reaction is carried out in the presence of 0.1 to 1.0 mol of alkali metal fluoride, based on 1 mol of alkali metal sulphide.

7. Process according to Claims 1 to 6, characterised in that the alkali metal sulphides and alkali metal fluorides are employed in the form of their hydrates or in aqueous mixtures, and a one-stage or multi-stage dehydration is carried out before the addition of dihalogenobenzenes.

8. Process according to Claim 1 to 7, characterised in that N-methylpyrolidone is employed as the solvent.

**Revendications**

1. Procédé de production de sulfures de polyarylène par réaction de

a) dihalogénobenzènes qui sont formés de 50 à 100 moles% de composés de formule I ou II ou de leurs mélanges

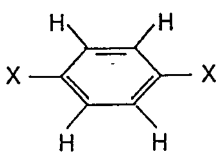
(I),
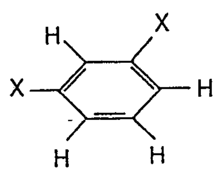
(II)

et de 0 à 50 moles% de composés de formule III

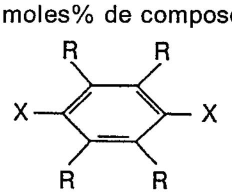
(III)

formules dans lesquelles

X représente le fluor, le chlore, le brome ou l'iode, de préférence le chlore et le brome et

R représente des groupes identiques ou différents pouvant être de l'hydrogène, des groupes alkyle en $C_1$ à $C_{20}$, cycloalkyle en $C_5$ à $C_{20}$, aryle en $C_6$ à $C_{24}$, alkaryle en $C_7$ à $C_{24}$ ou aralkyle en $C_7$ à $C_{24}$ et/ou deux restes R peuvent s'associer pour former un noyau aromatique ou hétérocyclique, au moins un reste R étant alors toujours différent de l'hydrogène, et

b) 0 à 3,0 moles%, par rapport à la portion dihalogénobenzénique, d'un hydrocarbure polyhalogénoaromatique de formule IV

$$Ar\ X_n, \qquad (IV)$$

dans laquelle Ar représente un reste aromatique ou hétérocyclique quelconque ayant 6 à 24 atomes de carbone et au moins 3 valences libres,

X a la même définition que dans les formules I, II et III et n est égal ou supérieur à 3,

avec

c) un sulfure alcalin

dans

d) un solvant polaire,(le rapport molaire a) à c) étant situé dans l'intervalle de 0,85:1 à 1,15:1 et le rapport molaire de c) à d) étant situé dans l'intervalle de 1:2 à l:15, pendant une durée de polycondensation allant jusqu'à 30 heures et à une température de polycondensation comprise entre 160 et 295 °C, caractérisé en ce qu'on conduit la réaction en présence de 0,05 à 2,0 moles, par rapport à l mole de sulfure alcalin, de fluorure de sodium ou de fluorure de potassium ou de leurs mélanges.

2. Procédé suivant la revendication 1, caractérisé en ce qu'on utilise comme composant a) 50 à 100 moles% de composés de formule I et 0 à 50 moles% de composés de formule III.

3. Procédé suivant la revendication 1, caractérisé en ce qu'on utilise comme composant a) 100 moles% de composés de formule I.

4. Procédé suivant les revendications 1 à 3, caractérisé en ce que la durée de polycondensation va de 0,2 à 8 heures.

5. Procédé suivant les revendications 1 à 4, caractérisé en ce que la température de réaction se situe entre 190 et 275 °C.

6. Procédé suivant les revendications 1 à 5, caractérisé en ce qu'on conduit la réaction en présence de 0,1 à 1,0 mole de fluorure alcalin par rapport à 1 mole de sulfure alcalin.

7. Procédé suivant les revendications 1 à 6, caractérisé en ce que les sulfures et les fluorures alcalins sont utilisés sous la forme de leurs hydrates ou en mélanges aqueux et, avant l'addition de dihalogénobenzènes, on effectue une élimination d'eau en une ou plusieurs étapes.

8. Procédé suivant les revendications 1 à 7, caractérisé en ce qu'on utilise la N-méthylpyrrolidone comme solvant.